# EUROPEAN PATENT SPECIFICATION

(11) **EP 0 709 287 B1**
(45) Date of publication and mention of the grant of the patent: **01.08.2001**
(21) Application number: 95202781.1
(22) Date of filing: 16.10.1995
(51) Int. Cl.: B64F 1/12

(54) **Apparatus for gripping and raising, orientating and transporting helicopters particularly for decks of ships**
Vorrichtung zum Greifen und Abheben, Ausrichten und Transportieren von Hubschrauben, insbesondere an Bord von Schiffen
Dispositif pour la saisie et l'élévation, l'orientation et le transport d'hélicoptère, particulièrement à bord navires

(30) Priority: 21.10.1994 IT MI942160
(43) Date of publication of application: 01.05.1996
(73) Proprietor: Calzoni S.p.A., Calderara di Reno (Bologna) (IT)
(72) Inventor: Ortelli, Aurelio, I-40135 Bologna (IT)
(74) Representative: Raimondi, Alfredo, Dott. Ing. Prof.

(56) References cited:
- US-A- 3 830 452
- US-A- 4 420 132

## Description

The present invention relates to a deck of ships comprising an apparatus for gripping and raising, orienting and transporting helicopters of the wheeled type, in particular on board ships, platforms and the like.

It is known that the widespread use of helicopters on board ships poses the need for effecting transportation of a helicopter from a landing area, located on the deck itself, into a hangar situated on the deck of the same ship.

This operation, however, is particularly complicated owing to numerous factors which result in a high degree of unpredictability as regards both the landing position on the deck and the relative position of the helicopter, the deck itself and the hangar entrance; in addition, the manoeuvre must be able to be carried out in a total safe manner both for the helicopter and for the ship's crew, even under extremely hazardous conditions involving, for example, high winds and/or rough seas which cause pitching and rolling of the ship, resulting in an unstable equilibrium of the helicopter.

Certain technical solutions are also known, whereby use is made of a carriage which is movable on deck in a direction substantially parallel to the longitudinal axis of the ship and to which the helicopter must be hitched up after landing so that the carriage itself, by means of suitable devices, is able to transport the helicopter to the hangar.

Such devices, however, have certain drawbacks, including the fact that it is particularly difficult, especially during adverse weather conditions, to couple the helicopter to the carriage if the helicopter, after landing, is not properly positioned and has its longitudinal axis rotated with respect to the longitudinal axis of the ship.

The publication EP 0,518,405 also discloses in the name of the same Applicant an apparatus for gripping, handling and transporting helicopters in particular on board platform ships and the like, which comprises a pair of gripping elements arranged parallel to the longitudinal axis of the ship and designed to translate transversely with respect to said axis, in engagement with corresponding transverse guiding means fixed to the deck, and to assume an inclined, but mutually parallel position with respect to said guiding means, under the action of mutually independent operating means. Said apparatus, which enables the helicopter to be brought into the correct position for subsequent coupling to the carriage for longitudinal transportation towards the hangar, is particularly versatile and suitable for use with both helicopters of the runner type and helicopters of the wheeled type, but has complex mechanisms, operating devices and associated control devices which also require additional modifications to be made to the structure of the ship for example in order to fit the transverse guides.

The technical problem which is posed, therefore, is that of providing a simple and reliable apparatus suitable for hitching and raising a helicopter of the wheeled type in order to transport it, from any position inside a well-defined landing area on the deck of a ship, into a position where it is correctly oriented and aligned with respect to longitudinal guides provided on the deck of the ship itself for subsequent transportation towards the hangar, whereby such an operation must be able to be carried out easily and repeated whatever the relative position of the helicopter, inside the landing area and with respect to the longitudinal axis of the ship. This operation must also be able to be carried out automatically, and/or manually, but without operating personnel present on the deck in the vicinity of the landing zone, and allow the apparatus itself to be kept under cover inside the hangar until the moment when it is actually used for recovery of the helicopter.

These results are obtained by the present invention, which provides a deck of ships comprising an apparatus for gripping, raising, orienting and transporting helicopters according to the characteristics of claim 1.

Further details can be obtained from the following description, with reference to the accompanying drawings, in which:
Figure 1 shows a plan view of the ship deck according to the invention;
Figure 2 shows a partial schematic cross-section along the plane indicated by II-II in Figure 1;
Figure 3 shows a partially sectioned side view of the travel unit shown in Figure 2;
Figure 4 shows a schematic plan view of the apparatus during translation towards the helicopter;
Figure 5 shows a plan view of the apparatus closed in position between the front wheel and main wheels of the helicopter;
Figure 6 shows the apparatus during alignment with the axis of the wheels of the helicopter;
Figures 7a, 7b show a plan view and front view, respectively, of a detail of the open gripping device during coupling of the helicopter;
Figure 7c shows a schematic cross-section along the plane indicated by VIIc-VIIc in Fig. 7b;
Figures 8a, 8b show a plan view and side view, respectively, of a detail of the closed gripping device during coupling with the helicopter;
Figure 8c shows a schematic cross-section along the plane indicated by VIIIc-VIIIc in Figure 8b;
Figures 9, 10, 11a and 11b show a variation of an example of embodiment of the apparatus, viewed from above during the various phases of start-up, movement towards and orientation with respect to the helicopter.

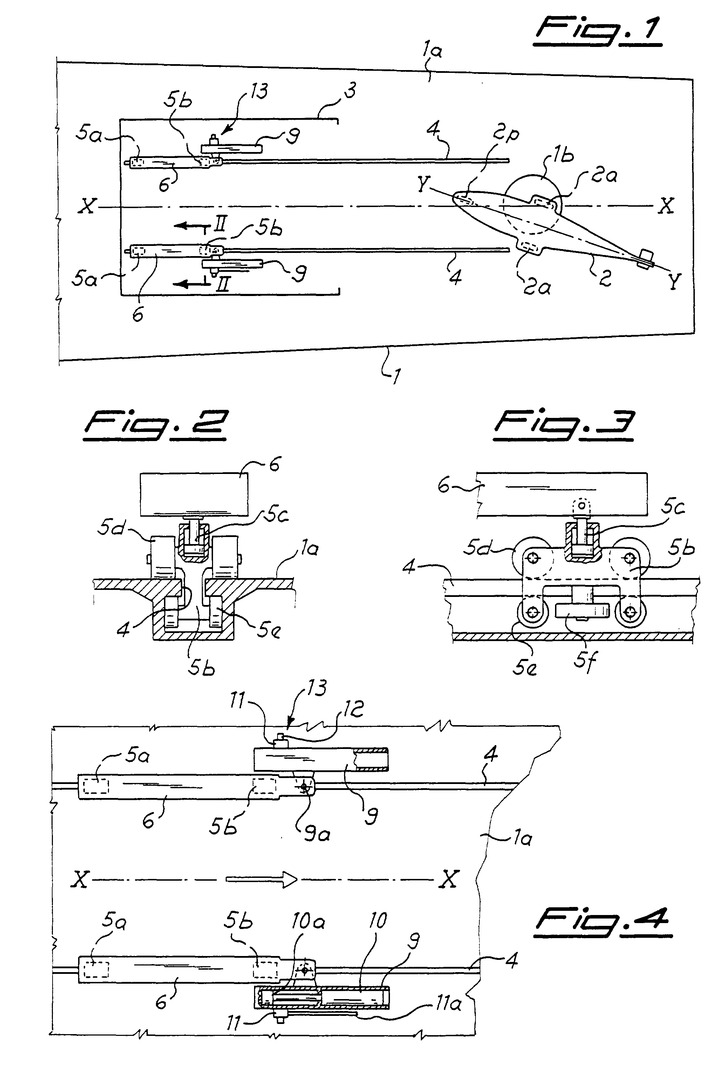

As shown in Figure 1, on the deck la of the ship 1, the longitudinal direction of which is indicated by the axis X-X, there is a grid 1b to which the helicopter must be secured, via its own hitching device, after landing on the deck 1a of the ship. Once it has landed and has been hitched to the grid, the helicopter may be in any position with its longitudinal axis Y-Y at angle to the longitudinal axis X-X of the ship, with which it must therefore be aligned for subsequent translation inside the hangar 3.

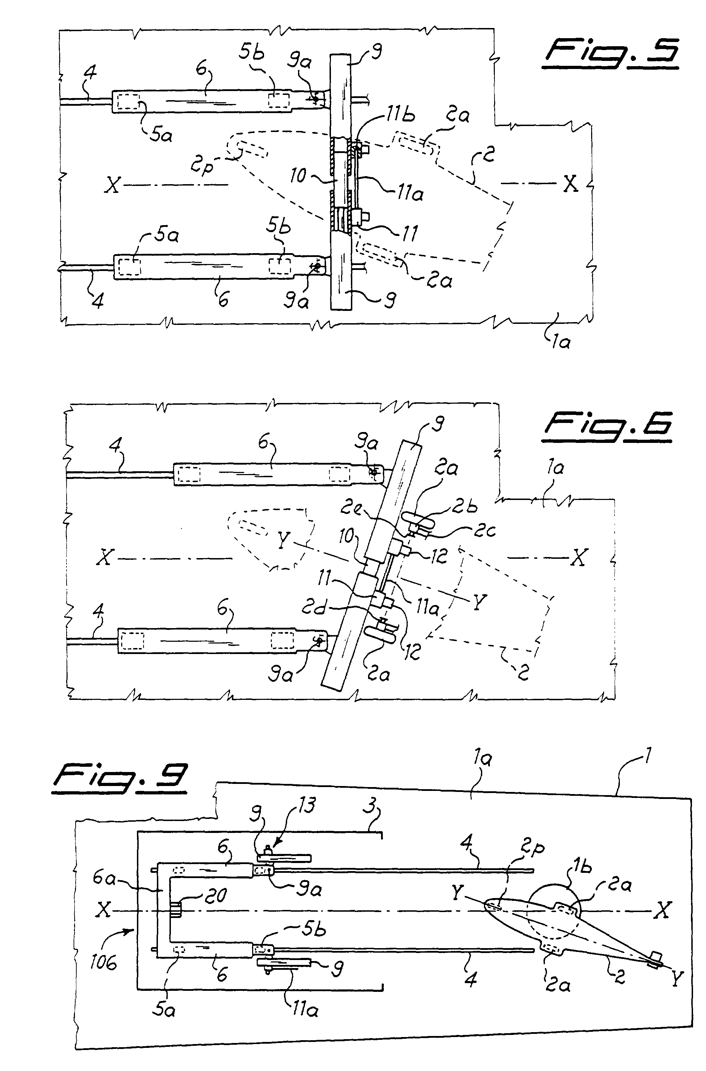

For this purpose, the deck la is provided with longitudinal rails 4 extending from inside the hangar as far as said grid 1b; as illustrated in the cross-sections shown in Figures 2 and 3, said rails 4 each have engaged with them two anti-tilting travel units 5a and 5b respectively secured to the opposite ends of two bars 6 arranged parallel to the longitudinal axis of the ship.

The travel units 5a are directly connected to the rear end of the bar 6, while the travel units 5b are connected to the front end of the bars 6 via a hydraulic cylinder 5c arranged between them.

Said travel units 5a, 5b haves suitable wheels 5d for travelling on the deck 1a, as well as anti-tilting wheels 5e (Figure 3) and wheels 5f for transverse locking. The movement of the bars 6 in the longitudinal direction is performed using means which are known and therefore neither illustrated nor described.

The end of the bar 6 directed towards the helicopter is therefore supported by the travel unit 5b and is connected via vertical-axis pins 9a to a further beam 9 which can be rotated about the pin 9a from an open rest position, substantially parallel to the arms 6 of the carriage 5 (Figure 4), into a closed position substantially perpendicular to said arms 6 (Figure 5).

The beams 9 are in turn hollow and only one of the two beams has inside it a bolt 10 which can be translated in either direction via a double-acting cylinder 10a.

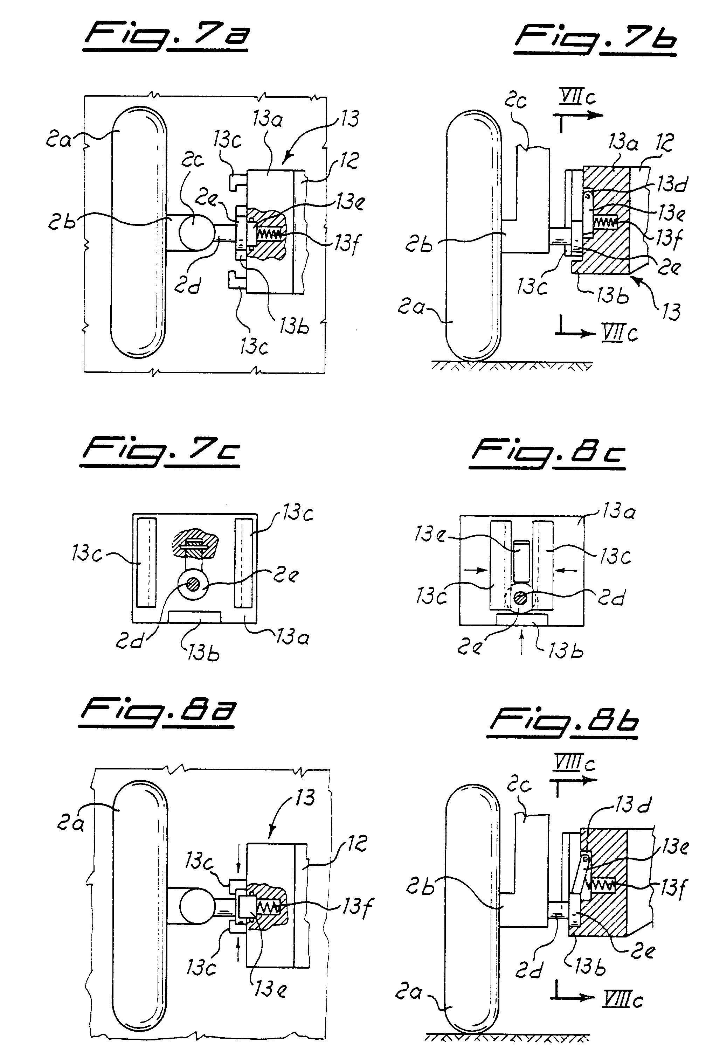

Moreover both the beams 9 have, on their external surface with respect to the carriage, parts (known per se and not illustrated) for supporting and guiding a cursor 11, movable parallel to the beam 9, from which there extends an arm 12 carrying the devices 13 for gripping the helicopter 2, described below. Only one of the cursors 11 also carries a bar 11a which is also parallel to the beam 9 and designed to be inserted into a corresponding seat llb of the other cursor 11 (Fig. 7) provided with suitable means for locking the bar itself.

The device 13 for gripping the helicopter 2 is designed to effect coupling with the head 2e of a pin 2d projecting from the inner side of the carriage shank 2c supporting the hub 2b of the main wheel 2a of the helicopter 2.

More particularly, the gripping device consists of a flat plate 13a provided with a bottom shoulder 13b projecting horizontally towards the wheel 2a; the wall 13a has mounted on it two jaws 13c slidable in the horizontal direction and designed, upon operation of hydraulic cylinders (not shown), to close around the head 2e of the pin 2d so as to retain it in the transverse and longitudinal direction.

The seat 13d of the plate 13a also houses a nose-piece 13e which is kept normally pushed outwards by a spring 13f and can be retracted inside the seat by operation of a hydraulic cylinder (not shown).

The apparatus operates as follows:

Once the helicopter 2 has landed on the deck 1a and has been hitched up to the grid 1b, the arms 6 carrying the beams 9 are moved outwards, the latter during this phase being rotated in the open position parallel to the arms 6 themselves.

The two longitudinal arms 6 are brought into a position underneath the helicopter between the front wheel 2p and main wheels 2a since the open beams are able to freely pass by the obstacles represented by the front wheel itself and the radar housing which, if present, projects underneath the fuselage of the helicopter 2.

Once they have reached said position (Figure 4), the beams 9 are rotated through 90° into the closed position and the cylinder 10a operated so as to cause the bolt 10 to emerge from one of the two beams 11 until it is inserted inside the other facing beam 11. Thus the two beams 9 form an assembly which is highly resistant to flexing both in the vertical plane and in the horizontal plane, but are at the same time free to slide with respect to one another in the longitudinal direction and in the two directions away from and/or towards each other, as will become clearer below.

At this point the two cursors 11 are also brought symmetrically into the end-of-travel position towards the axis of symmetry X-X of the ship and consequently the bar 11a is inserted into the cavity 11b of the opposite cursor 11.

Once the aforementioned connections have been performed, the apparatus forms a single articulated structure and the two bars 6 are moved in the direction of the wheels 2a of the helicopter asymmetrically so as to obtain alignment of the arms 9 with the axis of the wheels themselves (Figure 6), the inevitable increase in the distance between the pins 9a being compensated by sliding of the hollow beam 9 on the bolt 10.

Once the bars 9 are in position close and parallel to the axis of the main wheels 2a of the helicopter, the two cursors 11 are operated so as to move away from each other until they bring the gripping devices 13 into contact with the head 2e of the pin 2d of the wheel 2a, the manoeuvring mechanism exerting during this phase a light pushing action without forcing the wheels of the helicopter; in this position the cursors 11 are locked together by means of the bar 11a so as to form a single rigid element able to withstand the transverse forces transmitted by the helicopter once the latter is raised.

During this phase the head 2e of the pin 2d rests on the wall 13a of the gripping device 13, but may be displaced with respect to the central position owing to the imprecise positioning of the beams 9 with respect to the wheels 2a.

Furthermore, on account of the inevitable small movements of wheels themselves, the head of the pin may move a certain amount in both the horizontal and the vertical direction, while remaining within an area corresponding to the flat plate 13a.

In order to obtain complete securing of the wheels the vertical jaws 13c are symmetrically closed towards the centre so as to lock the head 2e and prevent both the longitudinal movements and outwards displacement of the helicopter wheels.

At this point the cylinders 5c of the travel units 5b are actuated, resulting in raising of the front end of the beams 6 and hence the gripping device 13, which will bring the shoulder 13b into contact with the head 2e of the pin 2d, causing the helicopter to be raised and hence the main wheels to be separated from the deck.

In this position the nose-piece 13e which is freed hydraulically will rotate outwards owing to the thrusting effect of the spring 13f, preventing the upwards sliding movement of the pin 2d.

At this point locking of the wheels to the gripping device is complete in all directions and the helicopter is firmly secured to the apparatus for the subsequent handling operations.

The first of these operations consists in moving the arms 6 in opposite directions, causing rotation of the beams 9, and hence of the helicopter, so as to bring its axis Y-Y parallel to the longitudinal axis X-X of the ship.

In order to allow said rotation, the front wheel 2p of the helicopter is rotated through 90° with respect to the axis Y-Y of the helicopter. Once the helicopter is arranged parallel to the longitudinal axis, the cursors 11 (which are fastened together) are translated in the transverse direction so as to cause the axis Y-Y of the helicopter to coincide substantially with the axis X-X of the ship.

In this position the helicopter is aligned with the hangar entrance and, after straightening the front wheel, the arms 6 can be retracted inside the hangar for final recovery of the helicopter.

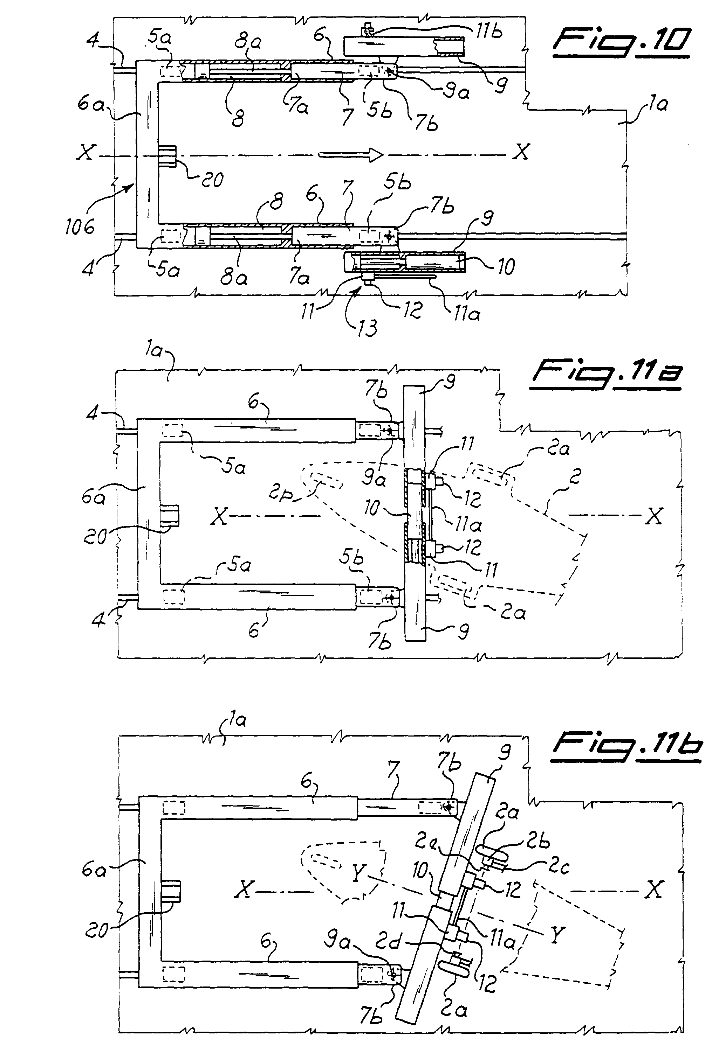

Figures 9, 10 and 11 illustrate a variation of an example of embodiment of the apparatus according to the invention.

In particular the arms 6 may be connected in the transverse direction by an arm 6a at the end opposite to that of the helicopter, thus forming a carriage 106 substantially consisting of a U-shaped frame, the parallel fixed arms 6 of which are arranged parallel to the axis X-X of the ship and are internally hollow so as to contain a beam 7, the end 7a of which inside the arm 6 is fixed to the rod 8a of a cylinder 8 which is actuated so as to cause the beams 7 to emerge from and/or retract into the arm 6.

In particular the said cylinders 8 are of the double-acting type and may be actuated so as to cause equal displacement of the two beams 7 in opposite directions.

The free end 7b of the beams 7, on the other hand, is supported by the travel units 5b already described and rotationally connected to the bar 9 via the pins 9a as in the case above.

When the helicopter has landed and has been hitched to the grid 1b, the carriage 106, which is arranged in its configuration with the beams 9 rotated into the open position parallel to the arms 6 and the sliding beams 7 in the central position, can be brought into a position, underneath the helicopter, located between the front wheel 2p and the main wheels 2a since the open beams are able to freely pass by the obstacles represented by the front wheel itself and the radar housing which projects underneath the cockpit of the helicopter 2.

Once the connections already described have been completed it is possible to commence the phase involving coupling of the helicopter wheels so as to align the helicopter and transport it into the hangar. In order to perform these operations, the carriage 106 is brought closer to the main wheels 2a of the helicopter and the cylinders 8 are actuated so as to cause the movable beams 7 to slide in opposite directions, this resulting in the rotating beams 9 being oriented in a direction parallel to that of the axis of the main wheels 2a of the helicopter 2; the inevitable increase in the distance between the pins 9a being compensated by sliding of the hollow beam 9 on the bolt 10.

At this point the helicopter is engaged by the gripping devices 13, following which the movement of the beams 7 in opposite directions inside the fixed arms 6 of the carriage 106 causes rotation of the helicopter 2, which is arranged parallel to the longitudinal axis X-X of the ship.

By repeating the successive phases already described, the axis Y-Y of the helicopter is made to coincide with the axis X-X of the ship and in this position it is possible to bring the front wheel 2p into the centre of a device 20 for raising the same, integral with the transverse arm 6a of the carriage 5. In this way the helicopter is fully secured to the carriage 5 and can be transported by the latter into the hangar.

Many variations may be introduced as regards realization of the parts which make up the invention, without thereby departing from the protective scope of the present invention, as defined by the claims which follow, for example the rotating beams 9 can be arranged inside the arms 6 instead of outside them; or the cursors 11 can be arranged on the inner side of the rotating beams so that the main wheels are able to travel past and the helicopter can be gripped with a return movement towards the wheels themselves.

## Claims

1. Deck of ships identified by an own longitudinal axis (X-X) into which rails (4) are joined along a direction parallel to the longitudinal axis (X-X), and comprising a landing area (1b), a parking area (3) And an apparatus for gripping, raising, orienting and transporting helicopters, having an own longitudinal axis (Y-Y), from said landing area (1b) to the parking area (3), said apparatus comprising support means (5a,5b) able to travel into said rails (4)
characterized in that
said apparatus consists of a pair of arms (6) parallel to said longitudinal axis (X-X), connected to said support means (5a,5b) and able to be translated independently of one another, at the end of each arm (6) directed towards the landing area (1b) there being rotationally connected a beam (9) carrying a cursor (11) sliding along it and carrying devices (13) for gripping corresponding securing means (2e) integral with the shanks of the main wheels (2a) of the helicopter (2).

2. Deck according to Claim 1, characterized in that said beam (9) is rotationally connected to the arm (6) via vertical-axis pins (9a) and can be brought from a position substantially parallel to the fixed arms (6) of the carriage (5) into a position substantially perpendicular thereto, in which the said beams (9) are facing and coaxial with each other.

3. Deck according to Claim 1, characterized in that said beams (9) are at least partially hollow in the longitudinal direction.

4. Deck according to Claim 2, characterized in that one of said beams (9) accommodates inside it a bolt (10) which can be operated in the longitudinal direction by associated means (10a) for engagement inside the other beam when they are arranged facing and coaxial with each other.

5. Deck according to Claim 4, characterized in that at least one of the two beams (9) is slidable on said bolt (10).

6. Deck according to Claim 1, characterized in that one of said cursors (11) carries a bar (11a) extending parallel to said rotating beam (9), while the other cursor (11) is provided with a corresponding seat (11b) for coupling with said bar (11a).

7. Deck according to Claim 6, characterized in that means are provided for relative fastening, in the longitudinal direction, of said bar (11a) and said cursor (11) provided with the seat (11b).

8. Deck according to Claim 1, characterized in that said arms (6) parallel to the longitudinal axis X-X of the ship are transversely connected so as to form a U-shaped frame, the parallel arms (6) of which are parallel to the longitudinal axis (X-X) of the ship (1) and the transverse arm (6a) of which is situated on the opposite side to that for gripping the helicopter, each of said arms (6) having sliding inside it, upon operation of associated actuating means (8), a first beam (7) having rotationally connected at its free end said beams (9) carrying the cursors (11) with the devices (13) for gripping the helicopter.

9. Deck according to Claim 8 characterized in that said means for effecting sliding of the beams (7) with respect to the arms (6) are able to cause displacement of the two beams (7) by the same amount and in opposite directions.

10. Deck according to Claim 1, characterized in that said devices (13) for gripping the helicopter comprise a flat vertical plate (13a) able to come into abutment with a corresponding head (2e) of a pin (2d) integral with the shank of the wheels (2a) of the helicopter, said flat plate having a bottom shoulder (13b) able to act against said head in the vertical direction, and movable means (13c) for gripping in the horizontal direction and locking (13d) in the vertical direction the head (2e) of the pin (2d).

11. Deck according to Claim 10 characterized in that said means for gripping in the horizontal direction consist of two L-shaped jaws (13c) moved by a hydraulic cylinder or the like.

12. Deck according to Claim 10 characterized in that said means for locking in the vertical direction consist of a nose-piece (13e) concealingly housed in a seat (13d) of the plate (13a) upon operation of associated actuating means acting against the thrusting action of resilient means (13f)

13. Deck according to claim 1 characterized in that the end of said longitudinal arms (6) directed toward the landing area are connected to the support means (5a) via a hydraulic cylinder (5c) able to raise said end of the longitudinal arms with respect to the support means itself.

## Patentansprüche

1. Durch eine eigene Längsachse (X-X) gekennzeichnetes Schiffsdeck, in das parallel zu der Längsachse (X-X) Schienen (4) eingelassen sind, und das eine Landezone (1b), eine Parkzone (3) und eine Vorrichtung zum Greifen, Anheben, Orientieren und Transportieren von eine eigene Längsachse (Y-Y) aufweisenden Hubschraubern aus der Landezone (1b) in die Parkzone (3) aufweist, wobei die Vorrichtung Stützmittel (5a, 5b) aufweist, die in den Schienen (4) laufen können, **dadurch gekennzeichnet,** daß die Vorrichtung aus einem Paar Arme (6) parallel zu der Längsachse (X-X) besteht, die mit den Stützmitteln (5a, 5b) verbunden und in der Lage sind, unabhängig voneinander eine translatorische Bewegung auszuführen, wobei an dem Ende jedes Arms (6), das der Landezone (1b) zugewandt ist, drehbar ein Träger (9) angebracht ist, der einen Läufer (11) trägt, der an ihm entlang gleitet und Einrichtungen (13) zum Greifen entsprechender Sicherungsmittel (2e) aufweist, die einstückig mit den Schäften der Haupträder (2a) des Hubschraubers (2) ausgebildet sind.

2. Deck nach Anspruch 1, **dadurch gekennzeichnet,** daß der Träger (9) drehbar mit dem Arm (6) über vertikale Achsen aufweisende Zapfen (9a) verbunden ist und aus einer Stellung im wesentlichen parallel zu den fixierten Armen (6) des Schlittens (5) in eine Stellung im wesentlichen rechtwinklig dazu gebracht werden kann, wobei in letzterer Stellung die Träger (9) einander gegenüberstehen und koaxial zueinander verlaufen.

3. Deck nach Anspruch 1, **dadurch gekennzeichnet,** daß die Träger (9) in Längsrichtung zumindest teilweise hohl sind.

4. Deck nach Anspruch 2, **dadurch gekennzeichnet,** daß einer der Träger (9) in seinem Inneren einen Bolzen (10) aufnimmt, der von zugehörigen Mitteln (10a) für den Eingriff im Inneren des anderen Trägers in Längsrichtung betätigt werden kann, wenn die Träger einander gegenüberstehend und koaxial zueinander angeordnet sind.

5. Deck nach Anspruch 4, **dadurch gekennzeichnet,** daß mindestens einer der beiden Träger (9) auf dem Bolzen (10) verschieblich ist.

6. Deck nach Anspruch 1, **dadurch gekennzeichnet,** daß einer der Läufer (11) eine Stange (11a) trägt, die sich parallel zu dem drehenden Träger (9) erstreckt, während der andere Läufer (11) mit einem entsprechenden Sitz (llb) zur Koppelung mit der Stange (11a) ausgestattet ist.

7. Deck nach Anspruch 6, **dadurch gekennzeichnet,** daß Mittel vorgesehen sind zur relativen Befestigung der Stange (11a) und des mit dem Sitz (llb) ausgestatteten Läufers (11) in Längsrichtung.

8. Deck nach Anspruch 1, **dadurch gekennzeichnet,** daß die zu der Längsachse (X-X) des Schiffs parallelen Arme (6) in Querrichtung unter Bildung eines U-förmigen Rahmens verbunden sind, dessen parallele Arme (6) parallel zu der Längsachse (X-X) des Schiffs (1) verlaufen, und dessen Querarm (6a) auf der Seite liegt, die der Seite zum Greifen des Hubschraubers abgewandt ist, wobei im Inneren jedes der Arme (6) bei Betätigung einer zugehörigen Betätigungseinrichtung (8) ein erster Träger (7) gleitet, an dessen freiem Ende drehbar die den Läufer (11) mit den Einrichtungen (13) zum Greifen des Hubschraubers tragenden Träger (9) verbunden sind.

9. Deck nach Anspruch 8, **dadurch gekennzeichnet,** daß die Mittel zum Bewirken eines Gleitens der Träger (7) bezüglich der Arme (6) in der Lage sind, eine Versetzung der beiden Träger (7) um gleichen Hub und in entgegengesetzte Richtungen zu veranlassen.

10. Deck nach Anspruch 1, **dadurch gekennzeichnet,** daß die Einrichtungen (13) zum Greifen des Hubschraubers eine flache vertikale Platte (13a) aufweisen, die in Anlage mit einem entsprechenden Kopf (2e) eines Zapfens (2d), der einstückig mit dem Schaft der Räder (2a) des Hubschraubers ist, bringbar ist, wobei die flache Platte eine Bodenschulter (13b) besitzt, die gegen den Kopf in vertikaler Richtung wirken kann, außerdem eine bewegliche Einrichtung (13c) zum Greifen des Kopfs (2e) des Zapfens (2d) in horizontaler Richtung und zum Verriegeln (13d) des Kopfs in vertikaler Richtung.

11. Deck nach Anspruch 10, **dadurch gekennzeichnet,** daß die Mittel zum Greifen in horizontaler Richtung aus zwei L-förmigen Klauen (13c) bestehen, die von einem Hydraulikzylinder oder dergleichen bewegt werden.

12. Deck nach Anspruch 10, **dadurch gekennzeichnet,** daß die Mittel zum Verriegeln in vertikaler Richtung aus einem Nasenstück (13e) bestehen, das durch Betätigung der zugehörigen Betätigungseinrichtung, die gegen die Stoßwirkung elastischer Mittel (13f) wird, verborgen in einem Sitz (13d) der Platte (13a) untergebracht ist.

13. Deck nach Anspruch 1, **dadurch gekennzeichnet,** daß das Ende der Längsarme (6), das in Richtung der Landezone weist, jeweils mit der Stützeinrichtung (5a) über einen Hydraulikzylinder (5c) gekoppelt ist, der im Stande ist, das Ende der Längsarme bezüglich der Stützmittel selbst anzuheben.

## Revendications

1. Pont de navires, identifié par son propre axe longitudinal (X-X), dans lequel des rails (4) sont placés selon une direction parallèle à l'axe longitudinal (X-X), et comprenant une aire d'atterrissage (1b), une aire de stationnement (3) et un dispositif pour saisir, soulever, orienter et transporter des hélicoptères, ayant son propre axe longitudinal (Y-Y), de ladite zone d'atterrissage (1b) à la zone de stationnement (3), ledit dispositif comprenant des moyens de support (5a, 5b) aptes à se déplacer sur lesdits rails (4),
***caractérisé en ce que***
ledit dispositif se compose d'une paire de bras (6) parallèles audit axe longitudinal (X-X), reliés auxdits moyens de support (5a, 5b) et aptes à subir un mouvement de translation indépendamment l'un de l'autre, une poutrelle (9) étant couplée de manière pivotante à l'extrémité de chaque bras (6) orientée vers la zone d'atterrissage (1b), poutrelle portant un curseur (11) coulissant le long de cette dernière et portant des dispositifs (13) pour la préhension de moyens de retenue correspondants (2e) intégrés aux jambes des roues principales (2a) de l'hélicoptère (2).

2. Pont selon la Revendication 1, ***caractérisé en ce que*** ladite poutrelle (9) est couplée de manière pivotante au bras (6) par l'intermédiaire de goupilles (9a) d'axe vertical et peut être amenée d'une position sensiblement parallèle aux bras fixes (6) du chariot (5) jusqu'à une position sensiblement perpendiculaire à ceux-ci, dans laquelle lesdites poutrelles (9) sont en vis-à-vis et coaxiales l'une avec l'autre.

3. Pont selon la Revendication 1, ***caractérisé en ce que*** lesdites poutrelles (9) sont au moins partiellement creuses dans le sens longitudinal.

4. Pont selon la Revendication 2, ***caractérisé en ce que*** l'une desdites poutrelles (9) reçoit intérieurement un verrou (10) qui peut être manoeuvré dans le sens longitudinal avec des moyens associés (10a) pour un engagement à l'intérieur de l'autre poutrelle lorsqu'elles sont en vis-à-vis et coaxiales l'une avec l'autre.

5. Pont selon la Revendication 4, ***caractérisé en ce que*** l'une au moins des deux poutrelles (9) peut coulisser sur ledit verrou (10).

6. Pont selon la Revendication 1, ***caractérisé en ce que*** l'un desdits curseurs (11) porte une barre (11a) s'étendant parallèlement à ladite poutrelle pivotante (9), l'autre curseur (11) étant muni d'un logement correspondant (11b) pour couplage avec ladite barre (11a).

7. Pont selon la Revendication 6, ***caractérisé en ce que*** des moyens sont prévus pour la liaison l'une par rapport à l'autre, dans le sens longitudinal, de ladite barre (1 la) et dudit curseur (11) muni du logement (11b).

8. Pont selon la Revendication 1, ***caractérisé en ce que*** lesdits bras (6) parallèles à l'axe longitudinal X-X du navire sont reliés transversalement pour former un cadre en U, dont les bras parallèles (6) sont parallèles à l'axe longitudinal (X-X) du navire (1) et dont le bras transversal (6a) est situé sur le côté opposé à celui pour saisir l'hélicoptère, chacun desdits bras (6) ayant, coulissant intérieurement à lui, à la mise en oeuvre de moyens d'actionnement (8) appropriés, une première poutrelle (7) ayant, couplées de manière pivotante sur son extrémité libre, lesdites poutrelles (9) portant les curseurs (11) avec les dispositifs (13) pour la préhension de l'hélicoptère.

9. Pont selon la Revendication 8, ***caractérisé en ce que*** lesdits moyens pour mettre en oeuvre le coulissement des poutrelles (7) par rapport aux bras (6) sont aptes à provoquer le déplacement des deux poutrelles (7) d'une même distance et dans des directions opposées.

10. Pont selon la Revendication 1, ***caractérisé en ce que*** lesdits dispositifs (13) pour la préhension de l'hélicoptère comprennent une plaque verticale plate (13a) apte à venir en aboutement avec une tête correspondante (2e) d'une broche (2d) intégrée à la jambe des roues (2a) de l'hélicoptère, ladite plaque plate ayant un épaulement inférieur (13b) apte à agir contre ladite tête dans le sens vertical, et des moyens mobiles (13c) pour la préhension dans le sens horizontal et le blocage (13d) dans le sens vertical de la tête (2e) de la broche (2d).

11. Pont selon la Revendication 10, ***caractérisé en ce que*** lesdits moyens pour la préhension dans le sens horizontal se composent de deux mâchoires en L (13c) déplacées par un vérin hydraulique ou un élément similaire.

12. Pont selon la Revendication 10, ***caractérisé en ce que*** lesdits moyens de blocage dans le sens vertical se composent d'une pièce avant (13e) encastrée dans un siège (13d) de la plaque (13a) lors de la mise en oeuvre des moyens d'actionnement associés agissant contre l'action de poussée de moyens élastique (13f).

13. Pont selon la Revendication 1, ***caractérisé en ce que*** l'extrémité desdits bras longitudinaux (6) orientée vers la zone d'atterrissage est couplée aux moyens de support (5a) par l'intermédiaire d'un vérin hydraulique (5c) apte à soulever ladite extrémité des bras longitudinaux par rapport au moyen de support lui-même.
